# EUROPEAN PATENT SPECIFICATION

(11) **EP 1 080 646 B1**
(45) Date of publication and mention of the grant of the patent: **27.08.2008**
(21) Application number: 00202972.6
(22) Date of filing: 23.08.2000
(51) Int. Cl.: A23P 1/16, A23L 1/19

(54) **Method for the preparation of pastry cream**
Verfahren zur Herstellung von Creme für Backwaren
Méthode de préparation de crème pour pâtisserie

(30) Priority: 23.08.1999 NL 1012877
(43) Date of publication of application: 07.03.2001
(73) Proprietor: Friesland Brands B.V., 7943 PE Meppel (NL)
(72) Inventor: Schutte, Ernst Jan, 5237 KW 's-Hertogenbosch (NL); Heuvelman, Lambertus, 7462 DR Rijssen (NL)
(74) Representative: Prins, Adrianus Willem

(56) References cited:
- EP-A- 0 191 487
- EP-A- 0 835 616
- GB-A- 1 467 422
- US-A- 5 707 677
- PATENT ABSTRACTS OF JAPAN vol. 1998, no. 05, 30 April 1998 (1998-04-30) & JP 10 023876 A (TSUKISHIMA SHOKUHIN KOGYO KK), 27 January 1998 (1998-01-27)
- PATENT ABSTRACTS OF JAPAN vol. 006, no. 139 (C-116), 28 July 1982 (1982-07-28) & JP 57 063053 A (KANEBO SHOKUHIN KK), 16 April 1982 (1982-04-16)

## Description

The present invention relates to a method for the preparation of pastry cream.

Pastry cream is a composed product which is frequently used in the bakers' and confectioners' industry as filling for cakes, almond pastry and pastry such as, for instance, cream slices. Of importance to a qualitatively good pastry cream are the following aspects: the composition, the physical properties and the preparation process.

Pastry cream is a gelled oil-in-water emulsion, in which water functions as the continuous phase. In addition to water, other essential components are: sweetener, fat, gelling agent, emulsifier and stabilizer. Besides, there may be added: milk powder, coloring and flavoring. As sweetener, sugar (sucrose) is generally used. Besides imparting the sweet flavor, sugar also contributes to the mouthfeel and to a low water activity of the product. Fat is in particular of importance to the flavor, the mouthfeel and the appearance of the pastry cream. Fat of both vegetable (for instance coconut oil) and animal (for instance milk fat) origin may be used. Gelling or thickening agents are used to impart the required thickness to the pastry cream. Examples of known gelling agents are gelatin, alginates and carrageen. To obtain a stable oil-in-water emulsion, conventional emulsifiers, such as mono- and/or diglycerides, are added. To prevent the thickening agent from sagging before the gelling process is completed, stabilizers are added. These impart such a basic viscosity to the solution that sagging is prevented. Suitable stabilizers are, for instance, modified starch, phosphates such as disodium phosphate, carrageen and xanthan gum.

Milk powder may be added for the flavor, mouthfeel and firmness (limited contribution to gelling) of the pastry cream. Colorings and flavorings may be added according to use. Examples are yellow colorings such as P-carotene and annato. As flavoring, vanilla may be used.

Physically, pastry cream is characterized by its firmness (thickness) and density. The density of the non-whipped product is slightly more than 1.0 g/ml. By whipping (aerating) the density sinks to 0.35-0.75 g/ml, depending on the composition and use.

The present ready-to-use pastry cream may be produced as follows Heated water of ca. 70°C is mixed with molten fat (at 70°C); then all the other components are added, and the mixture is brought to 65°C again, pasteurized and homogenized. Filling up small packings of 7.5-20 kg occurs at this temperature, because then the pastry cream is thin enough for processing. During cooling of the pastry cream in the packing the required gelling takes place.

The production of ready-to-use pastry cream in the above small packing has a number of drawbacks:
i. the processing at the end-user of the above small packings is a very labor-intensive process. Large numbers must be opened manually to collect the thick cream, to whip it so as to enable subsequent processing in the almond pastry and the cakes;
ii. because of the open character of the operations mentioned under i), these form an extra risk of infection in the production process of the final product (of importance within the scope of HACCP = Hazard Analysis and Critical Control Point);
iii. whipping the already settled gel in the ready-to-use pastry cream is connected with a loss of the gel structure. Although this is a reversible process, resettling leads to a less fine gel structure (loss of gloss) and therefore to an inferior quality of the pastry cream and thus of the final product, such as a cream slice.

According to the invention a method has now been found by which a product is obtained which can be more readily processed, and which product is qualitatively superior to the product obtained by the known processes.

The present invention relates to a method for the preparation of a pastry cream which contains a thickening agent, characterized in that the pastry cream is made just before use by mixing a thinly liquid base mixture with a thickening agent and whipping, and then allowing it to gel. By "just before use" it is meant that the two different streams, i.e. the thinly liquid stream and the stream with the thickening agent, are produced separately and optionally transported and/or stored before they are combined. Now the advantage of this method, in which the homogeneous, thinly liquid base mixture can be produced, packed (for instance 1000 kg), transported and processed in a continuous process on a much larger scale, is that the preparation of pastry cream can be automated and is thus much less labor-intensive, while, moreover, the risk of infection is much lower. In addition, a superior quality of the pastry cream is obtained.

The method of the invention therefore comprises combining a solution which contains the thickening agent and a mixture of the thickened other components shortly before use; followed by whipping the whole. Subsequently, the mixture can obtain its eventual consistency by gelling of the thickening agent.

This method inter alia solves the problem which occurs during whipping of a cream already gelled, that is to say: the gel structure partly breaks, and although it settles again, a less fine structure is obtained with, inter alia, a decrease of the gloss of the gel, as a result of which the quality is judged to be inferior.

European patent application 0 191 487 describes the preparation of foods of the type to which pastry cream also belongs. Disclosed therein is, inter alia, a method for the preparation of a food by which, as thickening agent already swollen in water, gelatin is added later to the other ingredients. Some whipping step takes place only after gelling. Some advantage or disadvantage connected with to the method described is not mentioned.

Furthermore, American patent 5,707,677 describes a frozen whipped topping. This topping is prepared by combining two pre-blends, one of which pre-blends consisting of the thickening agent starch, and then whipping and freezing it. The starch is first gelatinized before this fraction is combined with the other fraction. This patent publication, too, does not describe that advantages are obtained by first whipping and then gelling. Moreover, the above patent relates to a type of product different from that to which the present invention relates.

British patent 1 467 422 describes a method for stabilizing whipping cream, in which a stabilizer is added to a low-fat milk fraction, which fraction is combined with a cream fraction with a high fat content. Nowhere in this publication is mention made of gelling. It is not described that gelling is important, nor that advantages can be expected from whipping before gelling.

Finally, European patent application 0 835 616 describes the preparation of mousses. This publication, too, describes the combination of two blends, one of which containing the thickening agent. Not described is that whipping has to take place before the gelling step. On the contrary, from the examples it follows that in this publication, too, the gelling step lies before the whipping step.

According to the present invention the pastry cream is preferably made in an automated process consisting in mixing a liquid stream consisting of the thinly liquid base mixture with a liquid stream consisting of the solution of a thickening agent in a mixing chamber; simultaneously or afterwards the mixture is whipped with air in such an amount that a density of 0.35-0.75 g/ml, preferably 0.45-0.65 g/ml, is obtained.

The solution of the thickening agent has a temperature of 35-60°C, preferably of 40-50°C and more preferably a temperature of 40-50°C. The base mixture has a temperature of 2-12°C, preferably 4-10°C and more preferably a temperature of 6-8°C, One part of the thickening agent is mixed with 8-15 parts and preferably 10-12 parts of the base mixture. The temperature in the mixing chamber is maintained between 4-18°C, preferably 8-14°C and more preferably is not higher than 11-13°C. The thus prepared mixture rests for a period of 0.5-10 minutes, preferably 0.5-7 minutes and more preferably 0.5-3 minutes, during which period the gelling process starts. After the above period the mixture is arranged on the application and then gels further to the desired thickness.

A second aspect of the invention relates to the composition and the preparation of the base mixture. This contains as essential components water, sweetener, fat, emulsifier, stabilizer and optionally milk powder, flavorings and colorings. The base mixture is homogeneous and thinly liquid and is characterized by a density of 1.0-1.5 g/ml, preferably 1.0-1.2 g/ml and more preferably 1.0-1.1 g/ml and a viscosity at 10°C of 50-20000 mPa.s, preferably 200-5000 mPa.s and more preferably 500-2000 mPa.s

As for components, the cream according to the invention is not, at least not essentially, different from known pastry creams. The following description is therefore basically illustrative.

The water content of the base mixture, calculated on the base mixture.

As sweetener, sucrose may be used in a concentration of for instance 10-25%, preferably 12-22% and more preferably 14-19%.

As fat, for instance coconut oil, which is or is not partly hardened, may be used in a concentration of 5-20%, preferably of 8-18% and more preferably 10-14%.

As stabilizer, modified starch such as Clearam CH3010 may be added in a concentration of 0-6%, preferably of 1-5% and more preferably 1-4% of maltodextrin in a concentration of 0-8%, preferably 0-6% and more preferably 0-4%, or xanthan gum or carrageen or phosphate in a concentration of 0-1 %, preferably 0-0.5% and more preferably 0.02-0.1%, or a combination of these stabilizers in such a ratio that the same stabilization is obtained as with one of the above stabilizers separately.

As emulsifiers, for instance mono- and/or diglycerides such as Admul MG6203 may be added in a concentration of 0.1-2%, preferably 0.1-1% and more preferably 0.1-0.6%.

Low-fat milk powder may be added in a concentration of 0-10%, preferably 2-8% and more preferably 3-6%.

As flavoring, for instance vanilla powder may be added in a concentration of 0-0.01 %.

As coloring, for instance a yellow coloring may be added, such as Annato 062381 or Vegex Tumeric WS6 in a concentration of 0-0.05%.

The preparation of the thinly liquid base mixture occurs as follows: Water is heated in a tank to a temperature of 65-75°C, preferably 68-72°C and more preferably 69-71°C. The fat is molten at a temperature of 65-80°C, preferably 68-75°C and more preferably 69-71°C and added to the water while vigorously stirring. Then all the other components are added and the whole is heated again to a temperature of 60-70°C, preferably 62-68°C and more preferably 64-66°C and maintained at this temperature for 10-30 minutes, preferably 12-20 minutes and more preferably 14-16 minutes, until a homogeneous mixture is obtained. After pasteurization of the thinly liquid mass in a plate pasteur (4-8 seconds at 120°C) the mixture is cooled back to a temperature of 2-10°C, preferably less than 3-8°C and more preferably to 4-7°C and filled up in containers of for instance 1000 kg.

A third aspect of the invention relates to the composition and the preparation of a solution of a thickening agent. It consists of at least water and one or more thickening agents. Suitable thickening agents are gelatin, xanthan gum, carrageen and modified starch.

Gelatin, for instance and preferably with a bloom number of 250, may be used in a concentration of 10-40%, preferably 20-33% and more preferably 24-26%.

Xanthan gum may be used in a concentration of 0.01-50%, preferably 0.1-10% and more preferably 0.5-5%.

Carrageen may be used in a concentration of 0.1-50%, preferably 0.1-10% and more preferably 0.5-5%.

Modified starch may be used in a concentration of 1-50%, preferably 5-50% and more preferably 20-30%.

The preparation of the thickening agent occurs as follows. Water is heated to a temperature of 65-75°C, preferably 68-72°C and more preferably 69-71°C. The thickening agent is added and dissolved.

### Example 1 (Reference)

### Preparation of ready-to-use pastry cream

A composition for ready-to-use pastry cream is given in Table 1.

**Table 1. A composition for ready-to-use pastry cream**

| Type | Ingredient | E-number | Concentration Weight-% |
|---|---|---|---|
| continuous phase | water | | 66 |
| sweetener | sucrose | | 16 |
| vegetable fat | coconut oil | | 10 |
| milk powder | low-fat milk powder | | 5 |
| gelling agent | gelatin | E485 | 2 |
| emulsifier | Hymono 1163; or Imwitor 171 | E471 | 0.5 |
| stabilizer | acid sodium pyrophosphate | E450 | 0.1 |
| flavoring | Flav'O lock; or vanilla powder 181292; or vanilla powder 9380 | | 0.1 |
| coloring | beta-carotene 1%; or | E160a | 0.1 |
| | Eurocert golden yellow ; or | E101 | |
| | Annato WSA | E160b | |

The preparation process for this ready-to-use pastry cream consists of the following steps:
- The water is heated to 70°C.
- The fat is heated to and molten at 70°C.
- While vigorously stirring, the fat is added to the water.
- The other powdered components are added and stirred at a temperature of 65°C for 15 minutes until a homogeneous mixture is obtained.
- The mixture then passes a plate pasteur in which it is pre-heated to 70°C, is high-heated at 120°C for 4 seconds, after which it is cooled back to 70°C.
- The mixture is homogenized again in a one-step homogenizer at 70°C and 80 bar and then stored in a buffer tank from which 7.5-20 kg batches are filled up in polygal bags at a temperature of 60-65°C. The bags are cooled in a freezing cell to 15°C and then in a cooling cell (-5°C) to 2°C.

### Example 2

### Preparation of base mixture for pastry cream

A composition for ready-to-use pastry cream is given in Table 2.

**Table 2. Composition of a base mixture for pastry cream**

| Type | Ingredient | E-number | Concentration Weight-% |
|---|---|---|---|
| continuous phase | water | | 65 |
| sweetener | sucrose | | 15.5 |
| vegetable fat | coconut oil | | 10 |
| milk powder | low-fat milk powder | | 4.2 |
| emulsifier | Admul MG6203 | E471 | 0.4 |
| stabilizer | disodium phosphate | E339 | 0.08 |
| stabilizer | modified starch | E1422 | 3.2 |
| stabilizer | xanthan gum | | 0.05 |
| stabilizer | carrageen | E407 | 0.04 |
| filling agent | maltodextrin | | 1 |
| flavoring | vanilla powder 2MO5709; or vanilla powder K031170 | | 0.07 |
| coloring | Vegex Tumeric WS6; or | E100 | 0.05 |
| | Annato 062381 | E160b | |

The preparation process for this base mixture for pastry cream consists in the following steps:
- The water is heated to 70°C.
- The fat is molten and heated to 70°C. -
- While vigorously stirring, the fat is added to the water. -
- The other powdered components are added and stirred at a temperature of 65°C for 15 minutes until a homogeneous mixture is obtained.
- The mixture then passes a plate pasteur in which it is pre-heated to 70°C, is high-heated at 120°C for 4 seconds, after which it is cooled back to 7°C and filled up in containers of for instance 1000 liter.

### Example 3

### Preparation of a thickening agent on the basis of gelatin for making pastry cream

Alkaline gelatin with a bloom number of 250 is mixed with water in a ratio of one part of gelatin powder and three parts of water. This mixture is heated to ca. 70-80°C to completely dissolve the gelatin. The gelatin solution is cooled to ca. 45°C and maintained at this temperature and then used for the production of pastry cream as described in Example 4.

### Example 4

### Preparation of pastry cream starting from a base mixture and a thickening agent

A continuous stream of the thinly liquid base mixture as prepared according to Example 2 having a temperature of approximately 6-8°C and a continuous stream of the thickening agent as prepared according to Example 3 having a temperature of approximately 70-80°C are passed to and mixed and whipped in an aerator (Mondo mixer type VE-50). The air supply is controlled such that the desired density of the pastry cream (between 0.45 and 0.6 g/ml) can be obtained. The pressure in the mixing chamber is 3-4 bar, and the temperature is maintained below 14°C. After leaving the aerator the mixture begins to gel, and after some minutes the mixture is applied to a cream slice or other pastry shell.

## Claims

1. A method for the preparation of pastry cream which contains a thickening agent, **characterized in that** the pastry cream is made just before its use by processing the thinly liquid base mixture in a continuous process, the processing comprising mixing a thinly liquid base mixture with a solution of a thickening agent, followed by whipping and then allowing it to gel.

2. A method according to claim 1, **characterized in that** the base mixture consists of at least water, sweetener, fat, stabilizer, emulsifier and one or more of the following components: low-fat milk powder, flavorings and/or colorings.

3. A method according to claim 1, **characterized in that** the thickening agent consists of water and one or more of the following components: gelatin, alginate and/or carrageen

4. A method according to claim 1, wherein said use of the pastry cream is its use as filling for cakes, almond pastry or pastry, such as cream slices.

5. A method according to claim 1, wherein the pastry cream has a density after whipping of 0.35-0.75 g/ml.

## Patentansprüche

1. Verfahren zur Herstellung von Verdickungsmittel enthaltender Gebäckcreme, **dadurch gekennzeichnet, daß** die Gebäckcreme direkt vor ihrer Verwendung durch Verarbeitung der dünnflüssigen Basismischung in einem kontinuierlichen Verfahren hergestellt wird, wobei die Verarbeitung das Mischen der dünnflüssigen Basismischung mit einer Lösung des Verdickungsmittels, gefolgt von Schlagen und anschließendem Gelierenlassen, umfaßt.

2. Verfahren gemäß Anspruch 1, **dadurch gekennzeichnet, daß** die Basismischung mindestens aus Wasser, Süßungsmittel, Fett, Stabilisator, Emulgator und einer oder mehrerer der folgenden Komponenten besteht: Niedrigfett-Milchpulver, Geschmacksstoffe und/oder Farbstoffe.

3. Verfahren gemäß Anspruch 1, **dadurch gekennzeichnet, daß** das Verdickungsmittel aus Wasser und einer oder mehrerer der folgenden Komponenten besteht: Gelatine, Alginat und/oder Carrageen.

4. Verfahren gemäß Anspruch 1, wobei die Verwendung der Gebäckcreme ihre Verwendung als Füllung für Kuchen, Mandelgebäck oder Gebäck, wie beispielsweise Cremeschnitten, ist.

5. Verfahren gemäß Anspruch 1, wobei die Gebäckcreme nach dem Schlagen eine Dichte von 0,35 bis 0,75 g/ml hat.

## Revendications

1. Procédé de préparation d'une crème pour pâtisserie contenant un agent épaississant, **caractérisé en ce que** la crème pour pâtisserie est réalisée juste avant son utilisation par traitement du mélange de base liquide délayé dans un procédé continu, le traitement comprenant le mélange d'un mélange de base liquide délayé avec une solution d'un agent épaississant, suivi par un fouettage puis une gélification.

2. Procédé selon la revendication 1, **caractérisé en ce que** le mélange de base est constitué au moins d'eau, d'un agent sucrant, de graisses, d'un stabilisant, d'un émulsifiant et d'un ou plus des composants suivants : de la poudre de lait allégée en graisse, des agents d'arôme et/ou des agents de couleurs.

3. Procédé selon la revendication 1, **caractérisé en ce que** l'agent épaississant est constitué d'eau et d'un ou plus des composants suivants : de la gélatine, un alginate et / ou du carraghénane.

4. Procédé selon la revendication 1, dans lequel ladite utilisation de la crème pour pâtisserie et son utilisation en tant qu'agent de fourrage pour des gâteaux, des pâtisseries aux amandes ou des pâtisseries, telles que des tranches de crème.

5. Procédé selon la revendication 1, dans lequel la crème pour pâtisserie a une densité après fouettage de 0,35 à 0,75 g/mml.
